# EUROPÄISCHE PATENTANMELDUNG

(11) **EP 0 675 326 A1**
(43) Veröffentlichungstag der Anmeldung: **04.10.1995**
(21) Anmeldenummer: 95710011.8
(22) Anmeldetag: 28.03.1995
(51) Int. Cl.: F24D 3/08, F24H 9/20

(54) **Wasserheizanlage zur Bereitung von Brauch- und Heizwasser**

(30) Priorität: 28.03.1994 AT 651/94; 22.04.1994 DE 4414624; 27.05.1994 AT 1094/94
(71) Anmelder: Joh. Vaillant GmbH u. Co., D-42859 Remscheid (DE)
(72) Erfinder: Adam, Mario, Dr., D-42897 Remscheid (DE); Viefhues, Bernhard, D-48607 Ochtrup (DE); Plate, Joachim, D-42929 Wermelskirchen (DE)
(74) Vertreter: Heim, Johann-Ludwig

(57) **Zusammenfassung**

Wasserheizanlage zur Bereitung von Brauch- und Heizwasser mit einem von einem Brenner (21) beaufschlagten Primärwärmetauscher (20), der eine Vorlaufleitung (2) mit Heizwasser versorgt, die über ein Mehr-Wege-Ventil (23, 46) wahlweise mit einer Heizungsanlage (29) oder einem Sekundärwärmetauscher (25) verbunden ist, wobei eine Umlaufpumpe (28) vorgesehen ist, die vorzugsweise in einer zum Primärwärmetauscher (20) führenden Rücklaufleitung (5) angeordnet ist. Um die Zahl der Brennerstarts beim Betrieb des Umlaufwasserheizers zu minimieren, ist vorgesehen, daß eine Reihenschaltung aus dem Sekundärwärmetauscher (25) und einem Wärmespeicher (35) über ein Ventil (33, 50) mit der Rücklaufleitung (5) verbindbar ist.

## Beschreibung

Die Erfindung bezieht sich auf einen Wasserheizer gemäß dem Oberbegriff des Anspruches 1.

Bei solchen Wasserheizern ergibt sich das Problem, daß die für die Bereitung von Brauchwasser erforderliche Brennerleistung meist erheblich größer ist als die für die Bereitung des Heizwassers erforderliche Leistung. Dies trifft besonders für die Auslegung von kleineren Heizungsanlagen von 5 bis 10 kW, wie zum Beispiel für ein kleineres Einfamilienhaus oder eine für eine Wohneinheit konzipierte Etagenheizung zu.

Da weiter der Brauchwasserbedarf meist nur kurzzeitig gegeben ist, wird ein solcher auf den dafür notwendigen Leistungsbedarf von zum Beispiel 21 kW konzipierter Brenner und Wärmetauscher während des größten Teiles seiner Betriebszeit mit einer relativ kleinen Teillast betrieben, wodurch sich ein schlechter Wirkungsgrad ergibt. Außerdem kommt es bei solchen Wasserheizern aufgrund der ungünstigen Dimensionierung des Brenners zu häufigen Betriebsunterbrechungen und daher zu einem, durch die häufigen Startphasen bedingten, erhöhten Ausstoß von Schadstoffen in Form von Kohlenwasserstoffen.

Aufgrund des Trends zu einer besseren Wärmedämmung der Häuser und Wohnungen einerseits und luxuriöseren Bädern andererseits vergrößert sich der Unterschied zwischen dem Leistungsbedarf für die Heizung und jenem für die Brauchwasserbereitung, wodurch sich das oben aufgezeigte Problem weiter verschärft. So ist es bei entsprechender Wärmedämmung möglich, bei einer Wohneinheit mit 120 bis 150 m² mit einer Heizleistung von ca. 5 kW das Auslangen zu finden, wogegen für die Brauchwasserbereitung mit herkömmlichen Wasserheizern mit einem Leistungsbedarf von ca. 25 kW gerechnet werden muß. Da der Brauchwasserbedarf meist nur relativ kurzzeitig auftritt, ergibt sich das Problem, daß der Brenner sowie der Wärmetauscher über lange Zeit nur mit sehr kleiner Leistung oder in einem Intervallbetrieb mit kurzen Betriebszeiten betrieben werden kann. Dabei ergibt sich eine Verminderung des Wirkungsgrades beziehungsweise ein erhöhter Schadstoffausstoß.

Ziel der Erfindung ist es, diese Nachteile zu vermeiden und einen Umlaufheizer der eingangs erwähnten Art vorzuschlagen, der es erlaubt, den Brenner und den nachgeschalteten Primärwärmetauscher im wesentlichen auf den Heizbedarf der angeschlossenen Heizungsanlage zu dimensionieren und trotzdem ausreichend Brauchwasser mit genügender Temperatur und ausreichendem Durchsatz bereitstellen zu können.

Erfindungsgemäß wird dies bei einem Wasserheizer der eingangs erwähnten Art durch die kennzeichnenden Merkmale des Anspruches 1 erreicht.

Dabei kann der Primärkreis des Warmwasser-Sekundärwärmetauschers, der über das Umschaltventil vom Primärwärmetauscher versorgbar ist, mit dem Wärmespeicher in Reihe geschaltet sein.

Durch die vorgeschlagenen Maßnahmen wird erreicht, daß bei fehlendem Heizbedarf der Wärmespeicher aufgeladen werden kann. Die in diesem gespeicherte Wärme kann bei einer Zapfung von Brauchwasser zusätzlich zur Leistung des Brenners für die Bereitung des Brauchwassers genutzt werden. Dabei ist es ohne weiteres möglich, für die Bereitung des Brauchwassers ein Mehrfaches der Leistung des Brenners kurzzeitig zur Verfügung zu stellen.

Bei einer unterhalb der Nennlast des Brenners liegenden erforderlichen Heizleistung ist es möglich, den Wärmespeicher mit einem Teilstrom des Heizwassers aufzuladen.

Im Sommerbetrieb ist es durch die erfindungsgemäß vorgesehenen Merkmale auch möglich, bei über längere Zeit fehlendem Heizbedarf Brauchwasser für kürzere Zapfungen allein über den Wärmespeicher zu bereiten, wobei das im Wärmespeicher gespeicherte oder in diesem erwärmte Wasser den Sekundärwärmetauscher zugeführt werden kann. Dabei kann entweder das im vom Wärmespeicher kommende Wasser dem Primärkreis des Sekundärwärmetauschers zugeführt werden, oder aber, wenn der Wärmespeicher mit einem Trinkwasseranschluß verbunden ist, mit dem Sekundärkreis des Sekundärwärmetauschers verbunden sein. In jedem Fall ist es dadurch sichergestellt, daß nicht bei jeder Zapfung von Brauchwasser der Brenner gestartet werden muß. Dadurch wird der bei jedem Start des Brenners anfallende Schadstoffausstoß vermieden. Außerdem führen häufige Starts des Brenners zu einem Absinken des Wirkungsgrades.

Durch die Merkmale des Anspruches 2 ergibt sich ein geschlossener, wenngleich parallele Zweige aufweisender Kreis für das Heizwasser.

Durch die Merkmale des Anspruches 3 ergibt sich der Vorteil, daß das im Wärmespeicher befindliche Heizwasser auf kurzem Weg dem Primärkreis des Sekundärwärmespeichers zugeführt werden kann beziehungsweise auf kurzem Weg im Kreis geführt werden kann, ohne daß es über den Primärwärmetauscher geführt werden müßte, was zu entsprechenden Abstrahlungsverlusten führen würde.

Durch die Merkmale des Anspruches 4 ergibt sich der Vorteil, daß bei relativ geringem Volumen des Wärmespeichers große Wärmemengen gespeichert werden können.

Durch die Merkmale des Anspruches 5 ergibt sich der Vorteil, daß das im Wärmespeicher gespeicherte Brauchwasser auf einer entsprechend hohen Temperatur gehalten ist und unverzüglich bei Zapfbeginn zur Verfügung steht. Falls keine Heizungsanforderung vorliegt und der Brenner stillgesetzt ist, so kann, eine entsprechende Steuerung vorausgesetzt, der Bedarf an Brauchwasser für kurze Zapfungen allein aus dem Wärmespeicher gedeckt und ein Start des Brenners vermieden werden. Ein Start des Brenners erfolgt in einem solchen Fall erst dann, wenn die Temperatur im Wärmespeicher unter einen bestimmten Wert sinkt. Dadurch werden längere Brennphasen des Brenners sichergestellt.

Weiter ist es auch möglich, wenn nach Erfüllung einer Heizungsanforderung der Wärmespeicher eine Temperatur aufweist, die zwischen einer oberen Temperatur, bei der die weitere Energieeinspeisung abgeschaltet wird, und einer unteren Temperatur, bei der mit einer Energieeinspeisung in den Wärmespeicher spätestens begonnen wird, liegt, mit einer Aufheizung des Wärmespeichers zu beginnen, um die Zeit, bis zu der wieder mit einer Heizungsanforderung zu rechnen ist, zu überbrücken, auch wenn es zu keiner Zapfung von Brauchwasser kommt. Auf diese Weise kann die Häufigkeit der Schaltungen des Brenners und damit ein erhöhter Schadstoffausstoß vermieden werden.

Durch die Merkmale des Anspruches 6 ergibt sich der Vorteil, daß die Temperatur des Brauchwassers, das während des Betriebs des Brenners dem Sekundärkreis des Sekundärwärmetauschers zugeführt wird, geregelt werden kann, um einerseits das Brauchwasser je nach dem gegebenen Durchfluß auf die gewünschte Temperatur zu bringen und andererseits den Inhalt des Wärmespeichers möglichst wenig zu verwenden.

Auch durch diese Maßnahmen ergibt sich der Effekt, daß einerseits die Brenndauer des Brenners, aber auch dessen Stillstandszeiten verlängert und die Zahl der Starts des Brenners vermindert wird, wodurch der Ausstoß von Schadstoffen, der während der Startphasen höher als während des Normalbetriebes ist, vermindert wird.

Bei Wasserheizern nach dem Oberbegriff des Anspruches 7, die als Umlaufwasserheizer oder Kessel ausgebildet sein können, ergibt sich aufgrund der immer besseren Wärmedämmung der Häuser ein immer größer werdender Unterschied zwischen der zur Beheizung des Hauses erforderlichen Leistung und der zur Bereitung von Brauchwasser mit einem entsprechenden Komfort erforderlichen Leistung. Dies führt dazu, daß der Brenner des Wasserheizers in einem weiten Leistungsbereich modulierend betrieben werden muß, wodurch sich entsprechende Nachteile im Hinblick auf den Wirkungsgrad ergeben.

Um den Wirkungsgrad eines solchen Wasserheizers zu erhöhen, sind die kennzeichnenden Merkmale des Anspruches 7 vorgesehen.

Durch die wahlweise Verbindung des Primärwärmetauschers mit der Heizanlage, dem Sekundärwärmetauscher und dem Heizwasserspeicher ist es möglich, mit einem Brenner und Primärwärmetauscher von relativ kleiner Leistung das Auslangen zu finden. Dabei kann der Brenner eine Leistung aufweisen, die nur wenig über dem Heizungsbedarf liegt. Der Heizwasserspeicher kann während der Pausen einer Wärmeanforderung der Heizanlage aufgeheizt werden.

Bei einer Zapfung von Brauchwasser kann der Energiebedarf zur Bereitung des Brauchwassers zum Teil aus dem gespeicherten Heizwasser gedeckt werden, wobei der Primärwärmetauscher zur Lieferung der Restwärme herangezogen wird. Während der Zapfung kann dem Heizwasserspeicher kurzfristig eine sehr hohe Leistung entnommen werden, wobei der Primärwärmetauscher seine Leistung über unbegrenzte Zeit abgeben kann und beides gemäß der Erfindung einzeln oder kombiniert genützt wird.

Durch die Merkmale des Anspruches 8 ergibt sich der Vorteil, daß das Heizwasser des Heizwasserspeichers über den Primärwärmetauscher nacherhitzt werden kann, bevor es dem Primärkreis des Sekundärwärmetauschers zugeführt wird. Dadurch kann der Speicher kleiner ausgelegt werden.

Durch die Merkmale des Anspruches 9 ergibt sich ein einfacher Aufbau des Wasserheizers.

Durch die Merkmale des Anspruches 10 ist es möglich, außer dem Primärwärmetauscher auch noch eine weitere Wärmequelle zur Erwärmung des Inhaltes des Heizwasserspeichers heranzuziehen.

Bei herkömmlichen Wasserheizern der eingangs erwähnten Art ist der zweite Anschluß der Heizeinrichtung des Brauchwasserspeichers mit der Saugseite einer in der Rücklaufleitung der Heizungsanlage angeordneten Umwälzpumpe angeschlossen. Bei solchen Wasserheizern ist es möglich, allein den Brauchwasserheizer mit Heizwasser zu versorgen oder die Heizungsanlage, wobei meist eine Vorrangschaltung zugunsten der Brauchwasserbereitung vorhanden ist. Allerdings ist es bei den bekannten derartigen Wasserheizern bei Vorliegen einer Wärmeanforderung für die Heizungsanlage stets erforderlich, den Brenner zu starten. Dadurch kommt es bei jedem geringfügigen Unterschreiten einer vorgegebenen Soll-Temperatur in einem von der Heizungsanlage temperierten Raum zu einem Starten des Brenners, wobei der Brenner dann oft nur für relativ kurze Zeit in Betrieb bleibt. Dadurch kommt es aber zu einem vermehrten Schadstoffausstoß.

Um ein häufiges Starten des Brenners zu vermeiden, sind die kennzeichnenden Merkmale des Anspruches 11 vorgesehen.

Durch diese Maßnahmen ist es möglich, verschiedene Betriebsarten auf einfache Weise neben den üblichen Betriebsarten mit vom Brenner beaufschlagtem Primärwärmetauscher, bei denen die Heizungsanlage oder der Brauchwasserspeicher mit Heizwasser versorgt wird, auch ein Heizbetrieb ohne Beaufschlagung des Primärwärmetauschers durch den Brenner darzustellen. Dabei wird die Wärme dem Brauchwasserspeicher entnommen und der Heizungsanlage zugeführt.

Dadurch können eine entsprechende Zahl von Starts des Brenners vermieden werden, wobei die im Zuge eines aus dem Brauchwasserspeicher betriebenen Heizbetriebes aus diesem abgegebene Wärme im Zuge eines Brennerbetriebs zur Aufladung des Brauchwasserspeichers wieder gedeckt werden kann. Dabei ergeben sich entsprechend lange Betriebszeiten des Brenners.

Die Erfindung wird nun anhand der Zeichnung näher erläutert.

Dabei zeigen:
Fig. 1 bis 3 schematisch verschiedene Ausführungsformen einer erfindungsgemäßen Umlaufwasserheizanlage.
Fig. 4 schematisch einen weiteren erfindungsgemäßen Wasserheizer,
Fig. 5 bis 8 schematisch verschiedene Betriebsweisen des Wasserheizers gemäß der Fig. 4,
Fig. 9 bis 12 eine weitere Ausführungsform eines Wasserheizers, wobei verschiedene Betriebsarten schematisch eingezeichnet sind und
Fig. 13 eine weitere Ausführungsform eines erfindungsgemäßen Wasserheizers.

Gleiche Bezugszeichen bedeuten in allen Fig. gleiche Einzelheiten.

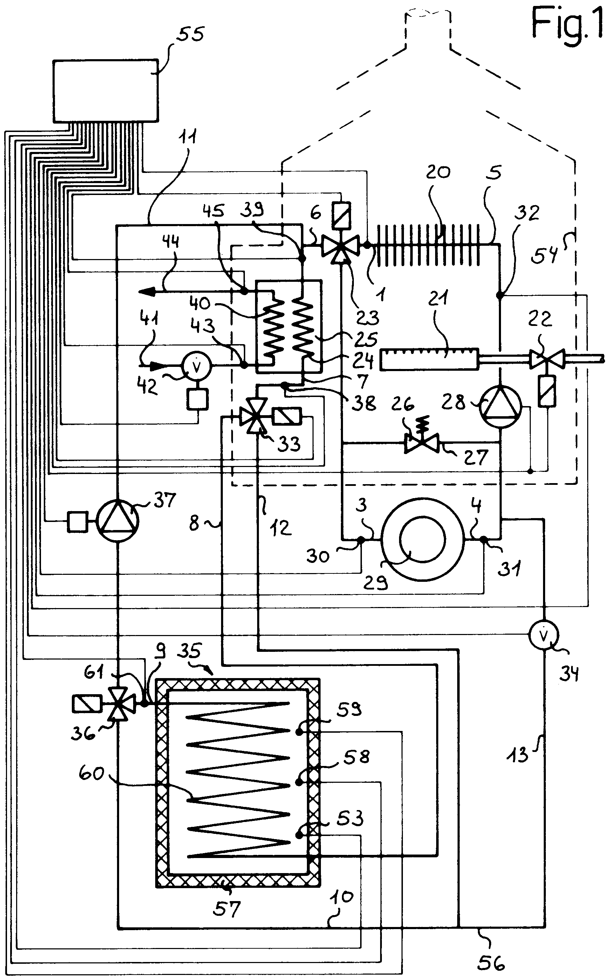

Ein Umlaufwasserheizer 54 nach der Fig. 1 weist einen Primärwärmetauscher 20 auf, der von einem modulierend arbeitenden Brenner 21 beaufschlagbar ist, dessen Brenngaszufuhr über ein Gasventil 22 geregelt ist.

Der Primärwärmetauscher 20 ist über eine Anschlußleitung 1 und ein Umschaltventil, im Falle der Ausführungsform nach der Fig. 1, einem Drei-Wege-Ventil 23, wahlweise mit einer Vorlaufleitung 2 oder einer Verbindungsleitung 6, in der ein Temperaturfühler 39 angeordnet ist, der mit einer Steuerung 55 verbunden ist, mit einem Primärkreis 24 eines Sekundärwärmetauschers 25 verbindbar.

Von der Vorlaufleitung 2 zweigt eine mit einem Überströmventil 26 versehene Bypassleitung 27 zu einer Rücklaufleitung 5 ab, in der eine Umlaufpumpe 28 angeordnet ist und die zum Primärwärmetauscher 20 führt.

Der Sekundärteil 40 des Sekundärwärmetauschers 25 ist über eine Anschlußleitung 41 mit einer Trinkwasserquelle verbunden, in welcher Leitung 41 ein Durchsatzmesser 42 und ein Temperaturfühler 43 angeordnet sind, die ebenso wie der in der vom Sekundärteil 40 wegführenden Zapfleitung 44 angeordnete Temperaturfühler 45 mit der Steuerung 55 verbunden sind.

Die Heizungsanlage 29 ist über eine Heizungsvorlaufleitung 3 und eine Heizungsrücklaufleitung 4 mit der Vorlauf- beziehungsweise Rücklaufleitung 2, 5 verbunden.

Dabei sind Temperaturfühler 30, 31 32 in der Heizungsvorlaufleitung 3, der Heizungsrücklaufleitung 4 und der Rücklaufleitung 5 angeordnet.

Der Primärkreis 24 des Sekundärwärmetauschers 25 ist über eine Anschlußleitung 7, in der ein Temperaturfühler 38 angeordnet ist, der mit der Steuerung 55 verbunden ist, mit einem Drei-Wege-Ventil 33 verbunden, an dem eine Verbindungsleitung 12 angeschlossen ist, die mit einer durch die Abschnitte 10, 13 gebildeten Leitung 56 verbunden ist. Der Abschnitt 13 steht mit der Rücklaufleitung 5 zwischen den Temperaturfühlern 31 und 32 in Verbindung und enthält einen weiteren Durchsatzmesser 34, der ebenso wie die Temperaturfühler 30, 31, 32 mit der Steuerung 55 verbunden ist, die auch sämtliche Ventile steuert.

An dem Ventil 33 ist weiter eine Leitung 8 angeschlossen, die zu einem Wärmespeicher 35 führt, der mit einer Wärmeisolierung 57 versehen ist. Dieser Wärmespeicher 35 ist in verschiedenen Höhen mit Temperaturfühlern 53, 58 und 59 versehen, die mit der Steuerung 55 verbunden sind.

Eine in dem Wärmespeicher 35 angeordnete, mit der Leitung 8 verbundene Wärmetauscher-Rohrschlange 60 ist ausgangsseitig über eine mit einem Temperaturfühler 61 versehene Anschlußleitung 9 mit dem zweiten Umschaltventil 36 verbunden, an dem der Abschnitt 10 und eine Verbindungsleitung 11 angeschlossen sind. In der Verbindungsleitung 11 ist eine Hilfsumwälzpumpe 37 eingeschaltet. Diese Verbindungsleitung 11 ist mit der Leitung 6 verbunden.

Bei diesem Umlaufwasserheizer 54 erfolgt bei Vorliegen einer Wärmeanforderung für die Heizungsanlage 29 aufgrund von Signalen eines der Temperaturfühler 30 oder 31 ein Start des Brenners 21, wobei das Heizwasser über die Vorlaufleitung 2 strömt. Liegt keine Wärmeanforderung mehr vor, so strömt das Heizwasser über die Leitung 6 und den Primärteil 24 des Sekundärwärmetauschers 25 und das Ventil 33 und die Leitung 8 zum Wärmespeicher 35, wobei das Heizwasser über die Leitung 9, das Ventil 36 und die Leitungsabschnitte 10, 13 und die Rücklaufleitung 5 zum Primärwärmetauscher 20 zurückfließt. Dabei wird das im Sekundärteil 40 des Sekundärwärmetauschers 25 befindliche Brauchwasser erwärmt und der Wärmespeicher 35 aufgeheizt. Dadurch wird erreicht, daß es nach der Erfüllung der Wärmeanforderung für die Heizungsanlage 29 zu keinem Stillsetzen des Brenners 21 kommt, der modulierend arbeitet. Dabei ist jedoch eine Vorrangschaltung über die Steuerung 55 für die Bereitung des Brauchwassers vorgesehen.

Bei Zapfung von Brauchwasser strömt, aufgrund der Vorrangschaltung auch bei aufrechter Wärmeanforderung der Heizanlage 29, das Heizwasser über die Leitung 6 zum Sekundärwärmetauscher 25. Reicht die Leistung des Brenners 21 aus, so wird das Mischventil 33 in Richtung zur Verbindungsleitung 12 geöffnet, so daß das Heizwasser über den Primärkreis 24 des Sekundärwärmetauschers 25, die Leitung 13 und die Rücklaufleitung 5 im Kreis über den Primärwärmetauscher 20 geführt wird.

Reicht dagegen die Leistung des Brenners 21 für die Bereitung des angeforderten Brauchwasserdurchsatzes nicht aus, so wird das Ventil 36 in Richtung zur Leitung 10 geöffnet und das Mischventil 33 in Richtung zur Leitung 8 geöffnet. Es bildet sich daher eine Strömung über die Leitungen 1, 6, 7, 8, 9, 10, 13, 5 aus, wobei das vom Wärmespeicher 35 kommende Heizwasser im Primärwärmetauscher 20 nacherwärmt wird, bevor es in dem Primärkreis 24 des Sekundärwärmetauschers 25 das Brauchwasser erwärmt. Dabei kann für kurze Zeit, zum Beispiel für 10 min, eine Leistung von zum Beispiel 30 kW in das Brauchwasser eingespeist werden, obwohl der Brenner 20 zum Beispiel nur 5 kW maximal an Leistung liefert.

Eine Anpassung an die tatsächlich erforderliche Leistung ist einerseits über den modulierenden Brenner 21, dessen Magnetventil 22 über Signale von der Steuerung 54 mehr oder weniger geöffnet werden kann, oder über das Mischventil 33 möglich, das es ermöglicht, auch einen Teilstrom über die Leitung 12 unter Umgehung des Wärmespeichers in die Rücklaufleitung 5 abzuführen. Eine solche Aufteilung wird von der Steuerung 54 auch vorgenommen, um eine zu hohe Temperatur im Bereich des Temperaturfühlers 32, das heißt eine zu hohe Rücklauftemperatur, zu vermeiden.

Liegt keine Wärmeanforderung für die Heizungsanlage 29 vor und ist auch der Wärmespeicher 35 voll aufgeladen, so wird, wenn auch keine Zapfung vorliegt, der Brenner 21, nachdem er vorher mit seiner maximalen Leistung betrieben worden war, stillgesetzt. Kommt es während der Stillstandszeit des Brenners zu einer Zapfung, so wird diese vorerst aus dem Wärmespeicher 35 gedeckt. Dabei wird das Ventil 36 in Richtung zur Leitung 11 geöffnet und die Hilfsumwälzpumpe 37 in Betrieb genommen. Dabei kommt es zu einer Strömung über die Leitungen 9, 11, den Primärkreis 24 des Sekundärwärmetauschers 25 sowie die Leitungen 7 und 8. Nur wenn die erforderliche Leistung, die durch den Volumenstrom des Brauchwassers und die gewünschte Temperaturerhöhung bestimmt ist, nicht ausreicht, wird der Brenner 21 gestartet. Dies geschieht auch, wenn die Temperatur im Wärmespeicher 35 zu weit abgesunken ist.

Es wäre möglich, auf die Leitung 11 und die Hilfsumwälzpumpe 37 und auch auf das Ventil 36 zu verzichten. Bei einer Bereitung von Brauchwasser allein über den Wärmespeicher 35 müßte dann allerdings das Heizwasser über die Leitungen 9, 10, 13, 5, den nicht vom Brenner 21 beaufschlagten Primärwärmetauscher 20, die Leitung 6, den Primärkreis 24 des Sekundärwärmetauschers 25 und die Leitungen 7 und 8 geführt werden. Allerdings müssen dann entsprechende Abstrahlungsverluste über den Primärwärmetauscher 20 in Kauf genommen werden, die sich aber mittels einer Abgasklappe im Abgasrohr vermeiden lassen.

Beim Sommerbetrieb, bei dem keine Wärmeanforderung für die Heizungsanlage zu erwarten ist, wird der Brenner nur zur Aufheizung des Wärmespeichers 35 und in jenen Fällen in Betrieb genommen, in denen die mögliche Leistungsentnahme aus dem Wärmespeicher 35 nicht ausreicht. Dadurch wird vermieden, daß bei jeder Zapfung der Brenner in Betrieb genommen werden muß. Es ergeben sich daher weniger Brennerstarts und längere Brennzeiten des Brenners 21, wodurch der Schadstoffausstoß vermindert wird.

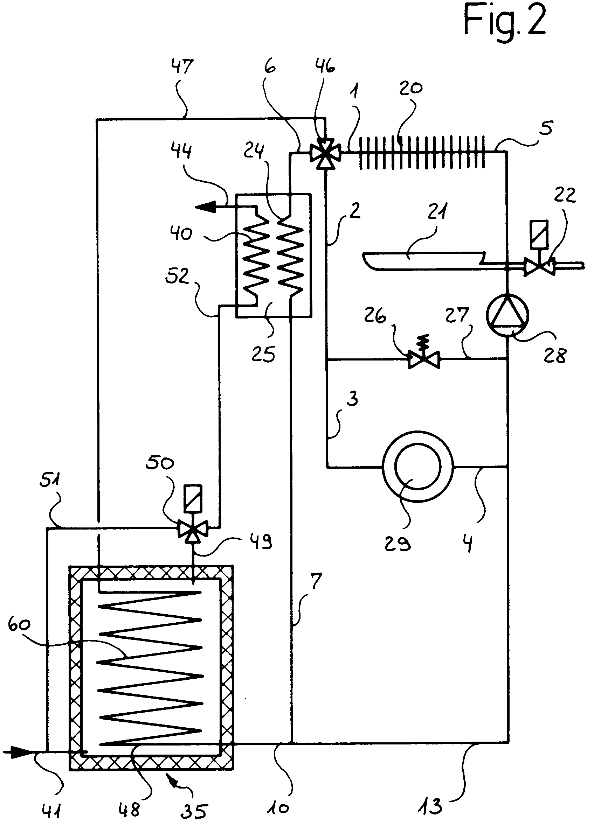

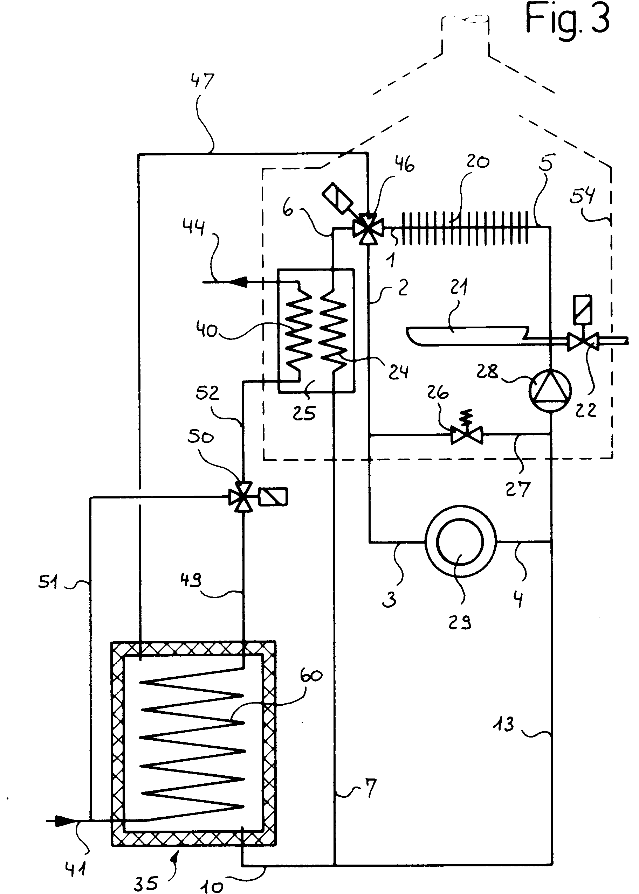

In den Fig. 2 und 3 sind die Temperaturfühler, die Volumenstrommesser, die Steuerung 55 und alle Steuerleitungen nicht dargestellt.

Die Ausführungsform nach der Fig. 2 unterscheidet sich von jener nach der Fig. 1 dadurch, daß das an die Leitung 1 angeschlossene Mehr-Wege-Ventil als Vier-Wege-Ventil 46 ausgebildet ist, an dem außer den Leitungen 1, 2 und 6 auch eine Leitung 47 angeschlossen ist, die zum Wärmespeicher 35 führt, der über die Leitungsabschnitte 10 und 13 mit der Rücklaufleitung 5 verbunden ist. Weiter enthält der Wärmespeicher 35 als Wärmetauscher die Rohrschlange 60. Weiter ist der Sekundärkreis 48 über eine Leitung 49 mit einem Mischventil 50 verbunden, von dem ein Anschluß über die Leitung 51 mit der Kaltwasserquelle 41 verbunden ist. An dem dritten Anschluß des Mischventiles 50 ist eine Leitung 52 angeschlossen, die mit dem Sekundärteil 40 des Sekundärwärmetauschers 25 verbunden ist, an dem die Zapfleitung 44 angeschlossen ist.

Bei der Ausführungsform nach der Fig. 2 strömt das Heizwasser durch die im Wärmespeicher 35 angeordnete Rohrschlange des Sekundärkreises 48, wogegen bei der Ausführungsform nach der Fig. 3 das Brauchwasser durch die im Wärmespeicher 35 angeordnete Rohrschlange strömt und das Heizwasser den Wärmespeicher 35 erfüllt.

Bei den Ausführungsformen nach den Fig. 2 oder 3 ergibt sich beim Heizbetrieb und Zapfbetrieb mit Einbringung der erforderlichen Energie ausschließlich durch den Brenner 21 gegenüber der Ausführungsform nach der Fig. 1 keine Änderung.

Die Aufladung des Wärmespeichers 35 erfolgt jedoch über das Vier-Wege-Ventil 46 und die Leitungen 47, 10, 13 und 5. Bei einem Zapfbetrieb mit einer gegenüber der Leistung des Brenners 21 erhöhten Leistung wird das Brauchwasser in zwei Teilströme aufgeteilt, wobei ein Teilstrom über die Leitung 41, den Wärmespeicher 35, die Leitungen 49 und 52 dem Sekundärwärmetauscher 25 geführt und nacherhitzt wird. Der zweite Teilzweig strömt über die Leitung 51, das Mischventil 50. Das Brauchwasser wird im Sekundärwärmetauscher nachgeheizt. Weiter kann dem aus dem Wärmespeicher 35 entnommenen erwärmten Brauchwasser über das Mischventil 50 kaltes Brauchwasser zugemischt werden.

Beim reinen Zapfbetrieb über den Wärmespeicher 35 strömt das im Wärmespeicher 35 befindliche aufgeheizte Wasser über das Mischventil 50 und den Sekundärteil 40 des Sekundärwärmetauschers 25 zur Zapfleitung 44. Dabei kann über das Mischventil 50 Kaltwasser zugemischt werden. Der Brenner 21 und der Primärwärmetauscher 20 sind nicht in Betrieb.

Beim Sommerbetrieb wird der Wärmespeicher 35 über die Leitungen 47, 10, 13 und 5 vom Primärwärmetauscher 20 aufgeheizt. Beim Zapfen wird das im Wärmespeicher 35 erwärmte Brauchwasser über die Leitungen 49, 52 und den Sekundärteil 40 des Sekundärwärmetauschers 25 entnommen. Im Bedarfsfall kann der Brenner 21 zugeschaltet werden, wobei das Heizwasser über die Leitungen 1, 6, 7, 13 und 5 geführt werden kann, um das Brauchwasser im Sekundärwärmetauscher 25 nachzuheizen.

Ein Primärwärmetauscher 20, der von einem Brenner 21 beaufschlagbar ist, ist über eine Auslaßleitung 102 mit einem Mehrstellungsventil 104 verbunden.

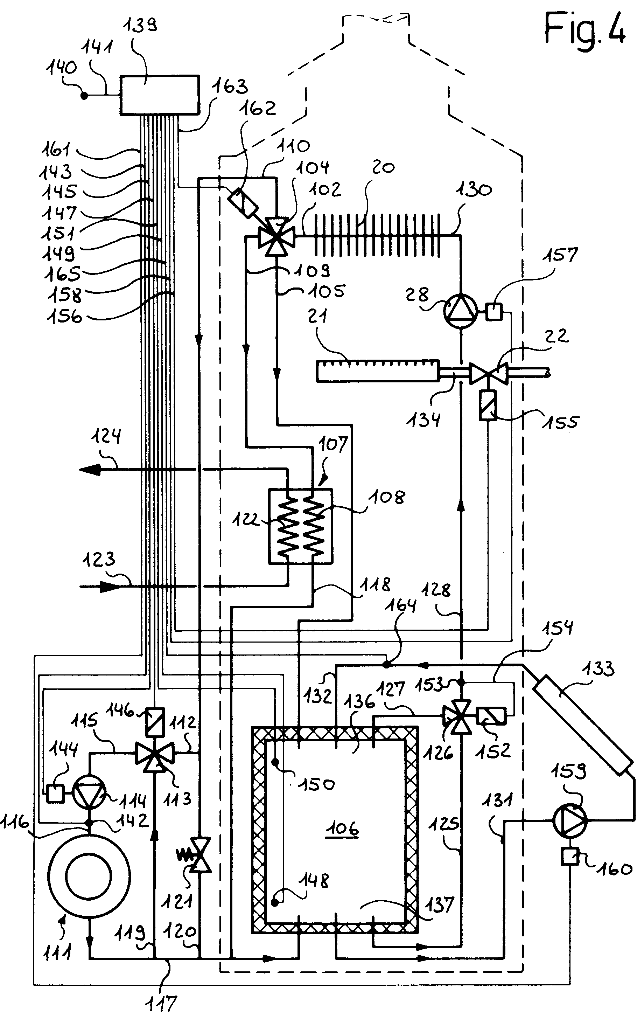

An diesem gemäß der Ausführungsform nach den Fig. 4 bis 8 als Vier-Wege-Ventil ausgebildeten Mehrstellungsventil 104 ist eine Speicherleitung 105, die zu einem Heizwasserspeicher 106 führt, eine zu einem Sekundärwärmetauscher 107 beziehungsweise dessen Primärzweig 108 führende Anschlußleitung 109 und eine Heizkreisleitung 110 angeschlossen. An die Heizkreisleitung 110 ist eine Heizungsanlage 111 über eine Vorlaufleitung 112 angeschlossen, in der ein Bypassventil 113 und eine Umwälzpumpe 114 angeordnet sind. Dabei sind diese Teile über Verbindungsleitungen 115, 116 miteinander und mit der Heizungsanlage 111 verbunden.

Eine Rücklaufleitung 117 der Heizungsanlage 111 führt zum Heizwasserspeicher 106, wobei eine Sekundärwärmetauscher-Rücklaufleitung 118 in die Rücklaufleitung 117 einmündet. Weiter mündet eine Bypassleitung 119 und eine Anschlußleitung 120, die von einem Überströmventil 121 wegführt, das an die Heizkreisleitung 110 angeschlossen ist, in die Rücklaufleitung 117.

Ein Sekundärzweig 122 des Sekundärwärmetauschers 107 ist mit einer Kaltwasseranschlußleitung 123 und einer Zapfleitung 124 verbunden.

Der Heizwasserspeicher 106 ist mit einer von seinem unteren Bereich 137 wegführenden Rücklaufleitung 125 verbunden, die zu einem Mischventil 126 führt. Dieses ist über eine in den oberen Bereich 136 des Heizwasserspeichers 106 mündenden Anschlußleitung 127 mit diesem und über eine Verbindungsleitung 128 mit einer Umwälzpumpe 28 verbunden, die über eine weitere Anschlußleitung 130 mit dem Primärwärmetauscher 20 verbunden ist.

Der Heizwasserspeicher 106 ist weiter über eine Vorlaufleitung 131 und eine Rücklaufleitung 132 mit einem Sonnenkollektor 133 verbunden. Dadurch kann der Inhalt des Heizwasserspeichers 106 auch über den Sonnenkollektor erwärmt werden.

Der Brenner 21 ist über eine Gasleitung 134, in der ein proportional arbeitendes Gasventil 22 angeordnet ist, modulierend mit Gas versorgbar.

An eine Steuer- und Regeleinheit 139 ist ein Außentemperaturfühler 140 über eine Leitung 141 angeschlossen. Weiter ist ein Vorlauftemperaturfühler 142 über eine Leitung 143, ein im oberen Bereich 136 des Heizwasserspeichers 106 angeordneter Temperaturfühler 150 über eine Leitung 151, ein im unteren Bereich 137 des Heizwasserspeichers 106 angeordneter Temperaturfühler 148 über eine Leitung 149, ein in der Rücklaufleitung 132 vom Sonnenkollektor 133 angeordneter Temperaturfühler 164 über eine Leitung 165 mit der Steuer- und Regeleinheit 139 verbunden. Ausgangsseitig ist die Steuer- und Regeleinheit 139 über eine Leitung 163 mit einem Antrieb 162 des Mehrstellungsventiles 104, über eine Leitung 156 ein Antrieb 155 des Gasventiles 22, über eine Leitung 158 ein Motor 157 der Umwälzpumpe 28, über eine Leitung 147 mit einem Antrieb 146 des Bypassventiles 113, über eine Leitung 145 ein Motor 144 der Umwälzpumpe 114 und über eine Leitung 161 ein Motor 160 einer Umwälzpumpe 159, an der der Sonnenkollektor 133 angeschlossen ist. Weiter ist an der Leitung 128 ein Temperaturfühler 153 angeordnet, der über eine Leitung 154 mit einem Antrieb 152 des Mischventiles 126 verbunden ist, so daß das dem Wärmetauscher 20 zugeführte Wasser auf einer bestimmten Temperatur gehalten werden kann.

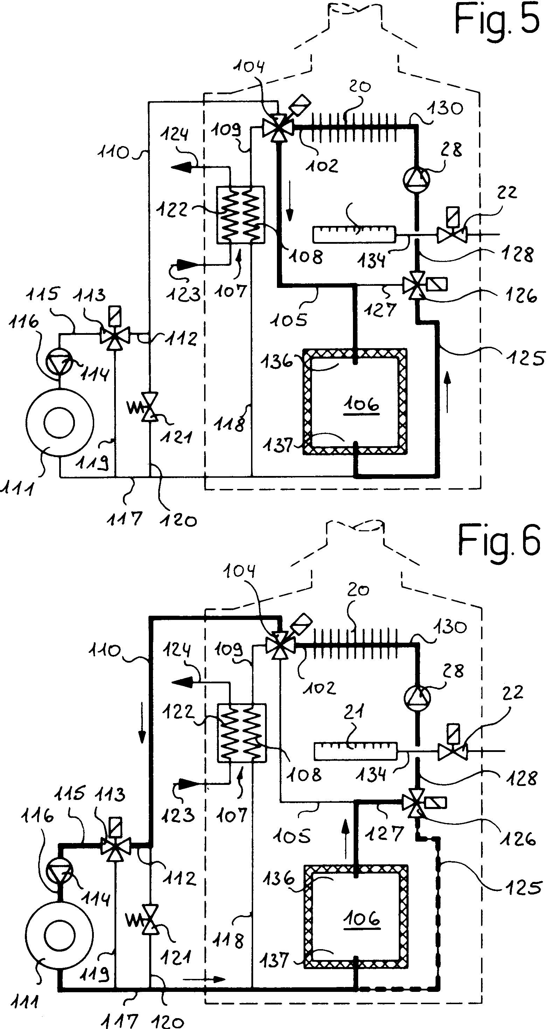

Die Fig. 5 bis 8 zeigen schematisch verschiedene Betriebsarten des Wasserheizers nach der Fig. 4.

Dabei zeigt Fig. 5 den Betrieb bei einer Ladung des Speichers 106, wobei die Strömung des Heizwassers mit einem dicken Strich eingezeichnet ist. Dabei kommt es bei laufender Umwälzpumpe 28 zu einer Strömung über die Auslaßleitung 102, das Mehrstellungsventil 104, die Speicherleitung 105, den Heizwasserspeicher 106, die Rücklaufleitung 125, das Mischventil 126, die Verbindungsleitung 128, die Umwälzpumpe 28 und die Anschlußleitung 130 zum Primärwärmetauscher 20 zurück. Dabei ist der Brenner 21 mit Gas versorgt, beheizt den Primärwärmetauscher, der seinerseits das Temperaturniveau des Heizwasserspeichers anhebt.

Bei diesem Betrieb wird ausschließlich der Inhalt des Heizwasserspeichers 106 erwärmt.

Fig. 6 zeigt die Strömungsverhältnisse bei einem Heizbetrieb mit Hybridversorgung der Heizungsanlage 111, wobei die durchströmten Bereiche mit dickeren Strichen angedeutet sind.

Bei diesem Betrieb kommt es zu einer Strömung des Heizwassers über die Anschlußleitung 102, das Mehrstellungsventil 104, die Heizkreisleitung 110, die Vorlaufleitung 112, das Bypassventil 113, die Verbindungsleitung 115, die gegebenenfalls ausgeschaltete Umwälzpumpe 114, die Verbindungsleitung 116 zur Heizungsanlage 111. Von dieser strömt das Heizwasser über die Rücklaufleitung 117 zum Heizwasserspeicher 106. Dabei kommt es je nach Stellung des Mischventiles 126 zu einer Aufteilung der Strömung über die Rücklaufleitung 125 und über den Heizwasserspeicher 106 zum Mischventil 126.

Dabei wird dem Primärwärmetauscher 20 über die Verbindungsleitung 128, die Umwälzpumpe 28 und die Anschlußleitung 130 Wasser zugeführt, dessen Temperatur von der Rücklauftemperatur der Heizungsanlage, der Temperatur im Heizwasserspeicher 106 und dem Mischungsverhältnis der durch den Heizwasserspeicher 106 und die Rücklaufleitung 125 strömenden Wasserströme abhängt. Dabei kann die Zulauftemperatur für den Primärwärmetauscher 20 durch eine entsprechende Einstellung des Mischventiles 126 eingestellt werden, wobei dieses thermisch von der Temperatur in der Leitung 128 gesteuert werden kann.

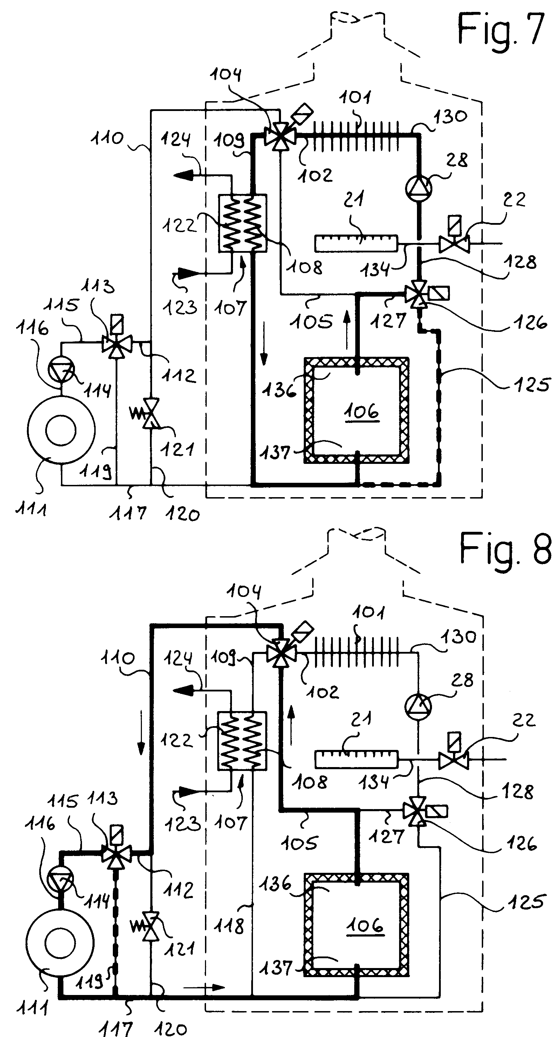

Bei diesem Betrieb kann ein Teil der zur Versorgung der Heizungsanlage 111 erforderlichen Energie vom Heizwasserspeicher 106 zugeführt werden, den Rest deckt der Primärwärmetauscher 20. Im Extremfall, zum Beispiel durch eine Nachtabsenkung, oder zur Überbrückung kann die Heizungsanlage 111 für eine bestimmte Zeit allein vom Heizwasserspeicher 106 versorgt werden, wie dies aus der Fig. 8 zu ersehen ist.

Dabei ergibt sich eine Strömung vom Heizwasserspeicher 106 über die Speicherleitung 105, das Mehrstellungsventil 104, die Heizkreisleitung 110, die Vorlaufleitung 112, das Bypassventil 113, das auch eine Aufteilung des Wasserstromes über die Bypassleitung 119 ermöglicht, die Verbindungsleitung 115, die laufende Umwälzpumpe 114 und die Verbindungsleitung 116 zur Heizungsanlage 111. Dabei ist die Heizungsanlage 111 über die Rücklaufleitung 117 mit dem Heizwasserspeicher 106 verbunden.

Bei diesem Betrieb ist der Brenner 21 nicht mit Gas versorgt.

Weiter ist auch bei entsprechender Stellung des Mischventiles 126 eine Energieversorgung der Heizungsanlage 111 allein über den Primärwärmetauscher 20 möglich, wobei eine Durchströmung des Heizwasserspeichers 106 unterbleibt und der Brenner 21 mit Gas versorgt ist, vgl. Fig. 6.

Der Betriebszustand "Brauchwasserbereitung" beim Wasserheizer nach der Fig. 4 ist in der Fig. 7 dargestellt, wobei die Strömung des Heizwassers mit dickeren Strichen dargestellt ist.

In diesem Betriebszustand strömt das Heizwasser vom Primärwärmetauscher 20 über die Auslaßleitung 102, das Mehrstellungsventil 104, die Anschlußleitung 109, den Primärzweig 108 des Sekundärwärmetauschers 107, die Sekundärwärmetauscher-Rücklaufleitung 118, die Rücklaufleitung 117, den Heizwasserspeicher 106, die Anschlußleitung 127, das Mischventil 126, die Verbindungsleitung 128, die Umwälzpumpe 28 und die Anschlußleitung 130 zum Primärwärmetauscher 20 zurück.

Dabei ergibt sich ein Hybridbetrieb, bei dem die Energieversorgung des Primärzweiges 108 des Sekundärwärmetauschers 107 sowohl über den Heizwasserspeicher 106, als auch über den Primärwärmetauscher 20 erfolgt. Dadurch ist es möglich, mit einem relativ leistungsschwachen Primärwärmetauscher 20 einen hohen Brauchwasserkomfort zu erzielen, da während der Brauchwasserbereitung relativ hohe Energiemengen dem Heizwasserspeicher 6 zusätzlich entnommen werden können. Wird bei kleinen Brauchwasserleistungen das Mischventil 126 so verstellt, daß die Leitung 127 verschlossen ist, so speist der Primärwärmetauscher 20 alleine den Sekundärwärmetauscher 107.

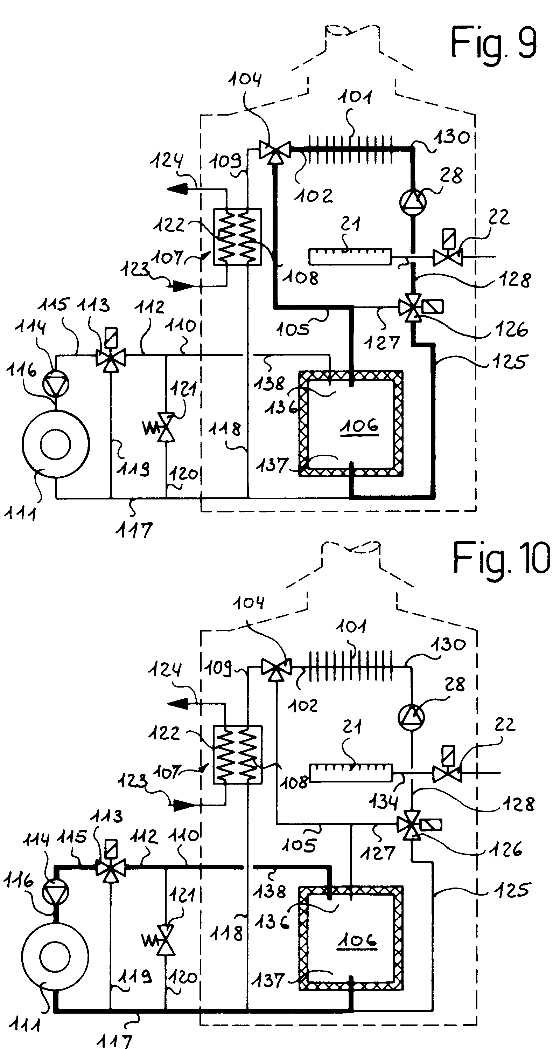

Der Wasserheizer nach den Fig. 9 bis 12 unterscheidet sich von jenem nach den Fig. 4 bis 8 dadurch, daß die Heizkreisleitung 110 nicht an dem Mehrstellungsventil 104, sondern an dem Heizwasserspeicher 106 über eine Zusatzleitung 138 angeschlossen ist und in dessen oberem Bereich 136 mündet und dann das Mehrstellungsventil 104 als Umschaltventil mit zwei Stellungen ausgebildet ist.

Beim Betrieb "Speicherladung" ergibt sich bei dem Wasserheizer nach den Fig. 9 bis 12 eine Strömung des Heizwassers vom Primärwärmetauscher 20, die Auslaßleitung 102, das Mehrstellungsventil 104, die Speicherleitung 105, den Heizwasserspeicher 106, die Rücklaufleitung 125, das Mischventil 126, das auch eine Bypassströmung über die Anschlußleitung 127 ermöglicht, die Verbindungsleitung 128, die Umwälzpumpe 28 und die Anschlußleitung 130 zurück zum Primärwärmetauscher 20, vgl. Fig. 9.

Die Fig. 10 zeigt die Verhältnisse bei einem Heizbetrieb mit ausschließlicher Versorgung der Heizungsanlage 111 vom Heizwasserspeicher 106.

Dabei wird die Umwälzung des Heizwassers allein durch die der Heizungsanlage zugeordnete Umwälzpumpe 114 sichergestellt. Es bildet sich dabei eine Umwälzung des Heizwassers vom Heizwasserspeicher 106 über die Zusatzleitung 138, die Heizkreisleitung 110, die Vorlaufleitung 112, das Bypassventil 113, die Verbindungsleitung 115, die Umwälzpumpe 114 zur Heizungsanlage 111 und über die Rücklaufleitung 117 zurück zum Heizwasserspeicher 106 aus.

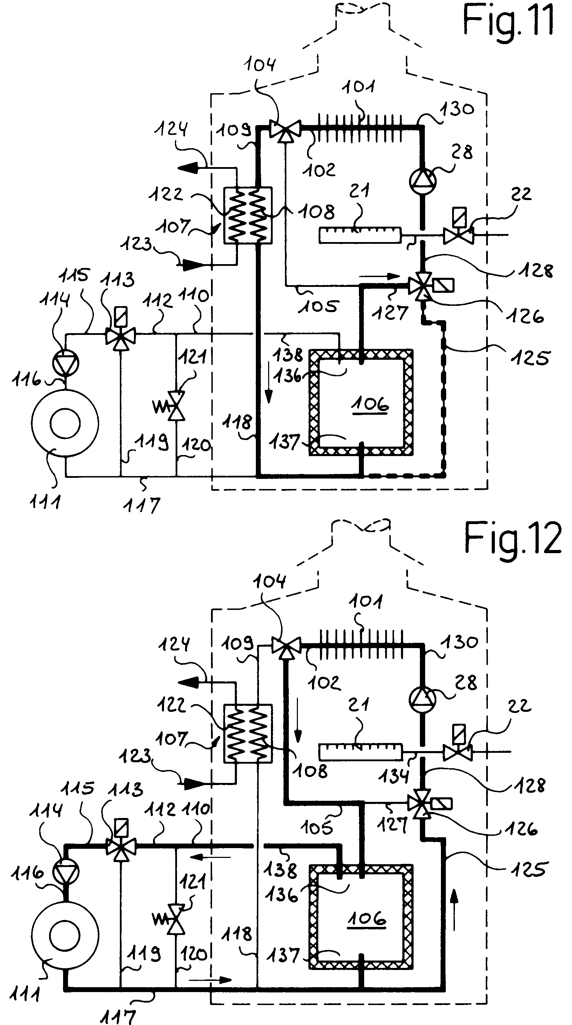

Wie aus der Fig. 12 ersichtlich, in der ebenfalls die durchströmten Leitungen mit stärkeren Strichen dargestellt sind, kann während des Betriebes der Heizungsanlage 111 der Heizwasserspeicher 106 aufgeheizt werden. Dies erfolgt, wie anhand der Fig. 9 beschrieben.

Die Fig. 11 zeigt die Brauchwasserbereitung. Dabei ergibt sich eine Strömung des Heizwassers vom Primärwärmetauscher 20 über die Auslaßleitung 102, das Mehrstellungsventil 104, die Anschlußleitung 109, den Primärzweig 108 des Sekundärwärmetauscher 107, die Sekundärwärmetauscher-Rücklaufleitung 118, die Rücklaufleitung 117, den Heizwasserspeicher 106, die Anschlußleitung 127, das Mischventil 126, die Verbindungsleitung 128, die Umwälzpumpe 28 und die Anschlußleitung 130 zurück zum Primärwärmetauscher 20. Dabei kann über das Mischventil 126 eine den Heizwasserspeicher 106 überbrückende Bypassströmung über die Rücklaufleitung 125 eingestellt werden, zum Beispiel um eine zu hohe Eintrittstemperatur des Heizwassers in den Primärwärmetauscher 20 zu vermeiden beziehungsweise um einen Hybridbetrieb, wie anhand der Fig. 7 beschrieben, zu realisieren.

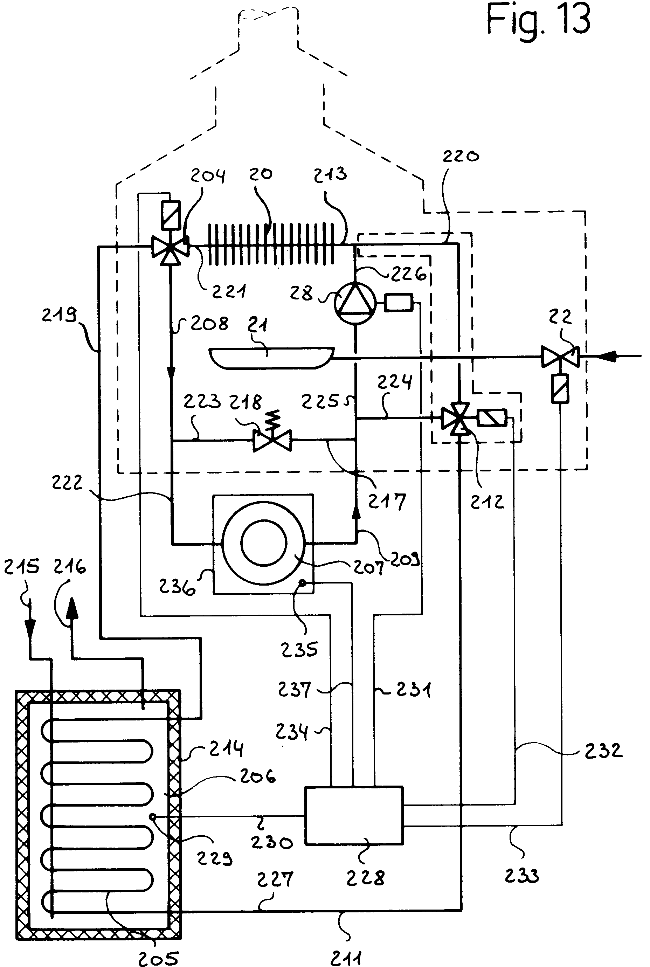

Die erfindungsgemäße Heizungsanlage nach der Fig. 13 weist einen von einem Brenner 21 beaufschlagten Primärwärmetauscher 20 auf. Der Brenner 21 ist über ein Gasventil 22 mit Gas versorgbar.

Der abströmseitige Auslaß 221 des Primärwärmetauschers 20 ist mit einem Mehr-Wege-Ventil 204 verbunden, an dessen weiteren Anschlüssen eine Vorlaufleitung 219 eines Heizzweiges 205 eines Brauchwasserspeichers 206 und eine zu einer Heizungsanlage 207 führende Vorlaufleitung 208 angeschlossen sind. Die Heizungsanlage 207 ist über eine Rücklaufleitung 209, in der eine Umwälzpumpe 28 angeordnet ist, mit einem Rücklaufanschluß 213 des Primärwärmetauschers 20 verbunden. Dabei ist in üblicher Weise ein Bypass 217, 223 mit einem Bypassventil 218 parallel zur Heizungsanlage 207 geschaltet.

Der zweite Anschluß 227 des Heizzweiges 205 des Brauchwasserspeichers 206 ist über eine Rückleitung 211 mit einem weiteren Mehr-Wege-Ventil 212 verbunden, dessen weitere Anschlüsse über eine Leitung 224 mit der Saugseite 225 der Umwälzpumpe 28 und dem Rücklaufanschluß 213 des Primärwärmetauschers 20 beziehungsweise der Druckseite 226 der Umlaufpumpe 28 verbunden sind.

Der Brauchwasserspeicher 206 ist mit einer Wärmeisolierung 214 versehen und weist einen Kaltwasseranschluß 215 auf, der bis nahe dem Boden des Brauchwasserspeichers 206 reicht und mit einem Anschluß einer Warmwasser-Zapfleitung 216 versehen ist, der an der Oberseite des Brauchwasserspeichers 206 angeordnet ist.

Eine Regelung 228 ist über eine Leitung 237 mit einem Raumfühler 235 verbunden, der in einem Raum 236 vorgesehen ist, in dem die Heizungsanlage 207 angeordnet ist. Weiter ist die Regelung 228 eingangsseitig mit einem im Brauchwasserspeicher 206 angeordneten Temperaturfühler 229 über eine Leitung 230 verbunden. Ausgangsseitig ist die Regelung 228 über eine Leitung 234 mit dem Mehr-Wege-Ventil 204, über eine Leitung 231 mit der Umlaufpumpe 210 beziehungsweise deren Motor, über eine Leitung 232 mit einem Mehr-Wege-Ventil 212 und eine Leitung 233 mit dem Gasventil 22 verbunden und steuert diese.

Mit der erfindungsgemäßen Heizanlage kann zur Aufheizung des Brauchwasserspeichers 206 der abströmseitige Anschluß beziehungsweise die Vorlaufleitung 221 des Primärwärmetauschers 20 mit dem Heizzweig 205 des Brauchwasserspeichers 206 verbunden werden, wobei der Primärwärmetauscher 20 vom Brenner 21 beaufschlagt ist, um den Brauchwasserspeicher 206 aufzuheizen. Das Mehr-Wege-Ventil 212 verbindet dabei die Leitung 211 und damit den Heizzweig 205 des Brauchwasserspeichers 206 mit der Saugseite der Umwälzpumpe 210, so daß das Heizwasser über das Mehr-Wege-Ventil 204, die Leitung 219, den Heizzweig 205, die Rückleitung 211, das Mehr-Wege-Ventil 212 und die Umlaufpumpe 210 zum Primärwärmetauscher 20 zurückströmt.

Bei Vorliegen einer Wärmeanforderung für die Heizungsanlage 207 strömt das Heizwasser bei vom Brenner 21 beaufschlagten Primärwärmetauscher 20 über das Mehr-Wege-Ventil 204, die Vorlaufleitung 208, die Heizungsanlage 207, die Rücklaufleitung 209 und die Umlaufpumpe 210 zum Primärwärmetauscher 20 zurück. Dabei wird die Wärme ausschließlich der Heizungsanlage zugeführt. Die Mehr-Wege-Ventile 204 und 212 sperren den Wasserdurchfluß durch den Heizzweig 205.

Kommt es während der Wärmeanforderung für die Heizungsanlage 207 zu einer Zapfung von Brauchwasser und somit zu einer Wärmeanforderung des Speichers, so wird das Mehr-Wege-Ventil 204 aufgrund einer Vorrangschaltung in der Regelung 228 umgeschaltet und die Vorlaufleitung 208 abgesperrt und der Weg zur Leitung 219 geöffnet, um eine Verbindung zum Heizzweig 205 des Brauchwasserspeichers 206 herzustellen. Dabei ist über das Mehr-Wege-Ventil 212 eine Verbindung von der Leitung 211 zur Rücklaufleitung 209 beziehungsweise zur Saugseite der Umlaufpumpe 28 über die Leitung 225 hergestellt.

Das Heizwasser strömt daher vom Primärwärmetauscher 20 über das Mehr-Wege-Ventil 204, die Leitung 219, den Heizkreis 205, die Leitung 211, das Drei-Wege-Ventil 212, die Rücklaufleitung 209 und die Umwälzpumpe 28 zum Primärwärmetauscher 20 zurück. Dabei wird die Wärme ausschließlich dem Brauchwasserspeicher 206 zugeführt.

Sinkt die Temperatur auch durch Brauchwasserzapfung des im Inneren des Brauchwasserspeichers gespeicherten Brauchwassers unter einen bestimmten Wert, während eine Wärmeanforderung für die Heizungsanlage vorliegt, so wird das Mehr-Wege-Ventil 204 auf den Speicherbetrieb umgeschaltet, bei dem das Heizwasser über die Leitung 219 strömt, sobald die Wärmeanforderung erfüllt ist. Dabei wird ein kurzfristiges Stillsetzen des Brenners vermieden.

Kommt es während einer Stillstandsphase des Brenners 21 zu einer Wärmeanforderung der Heizanlage 207, so wird das Mehr-Wege-Ventil 204 in der Weise umgeschaltet, daß eine Verbindung von der Leitung 219 auf die Vorlaufleitung 208 hergestellt wird und das Mehr-Wege-Ventil 212 eine Verbindung der Leitungen 211 und 220 herstellt und jene von der Leitung 211 zur Rücklaufleitung 209 unterbricht.

Es bildet sich daher bei eingeschalteter Umwälzpumpe 28 eine Strömung des im Heizzweig 205 des Brauchwasserspeichers 206 befindlichen Heizwassers über die Leitung 219, das Mehr-Wege-Ventil 204, die Vorlaufleitung 208, die Heizungsanlage 207, die Umwälzpumpe 28, die Leitung 220, das Mehr-Wege-Ventil 212 und die Leitung 211 zurück zum Heizzweig 205 des Brauchwasserspeichers 206 aus. Dabei wird das Heizwasser beim Durchströmen des Heizkreises 205 durch das vorher erwärmte Brauchwasser aufgeheizt. Auf diese Weise werden längere Stillstandszeiten des Brenners und andererseits längere Brennzeiten erreicht, da eben einerseits zur Deckung des Wärmebedarfs vorerst die im Brauchwasserspeicher 206 gespeicherte Energie verwendet wird und nach dem Start des Brenners nach der Abdeckung des Wärmebedarfs der Heizungsanlage 207 das Brauchwasser im Brauchwasserspeicher 206 wieder aufgeheizt wird, wodurch sich eben entsprechend lange Brennzeiten für den Brenner 21 ergeben.

Sinkt aufgrund des Energietransfers vom Brauchwasserspeicher 206 zur Heizungsanlage 207 die Temperatur des Brauchwassers unter einen vorbestimmten Wert, so wird der Brenner 21 gestartet. Dabei wird die Heizungsanlage 207 vom Primärwärmetauscher 20 mit Heizwasser versorgt, es sei denn, es kommt während dieser Zeit zu einer Zapfung von Brauchwasser, wodurch es aufgrund der Vorrangschaltung zu einer Versorgung des Brauchwasserspeichers 206 in der oben bereits erwähnten Weise kommt.

## Patentansprüche

1. Wasserheizanlage zur Bereitung von Brauch- und Heizwasser mit einem von einem Brenner (21) beaufschlagten Primärwärmetauscher (20), der eine Vorlaufleitung (2) mit Heizwasser versorgt, die über ein Mehr-Wege-Ventil (23, 46) wahlweise mit einer Heizungsanlage (29) oder einem Sekundärwärmetauscher (25) verbunden ist, wobei eine Umlaufpumpe (28) vorgesehen ist, die vorzugsweise in einer zum Primärwärmetauscher (20) führenden Rücklaufleitung (5) angeordnet ist, **dadurch gekennzeichnet**, daß eine Reihenschaltung aus dem Sekundärwärmetauscher (25) und einem Wärmespeicher (35) über ein Ventil (33, 50) mit der Rücklaufleitung (5) verbindbar ist.

2. Wasserheizer nach Anspruch 1, **dadurch gekennzeichnet**, daß der Primärkreis (24) des Sekundärwärmetauschers (25) über ein Mischventil (33) mit dem Wärmespeicher (35) oder der Rücklaufleitung (5) verbindbar ist.

3. Wasserheizer nach Anspruch 1 oder 2, **dadurch gekennzeichnet**, daß der Wärmespeicher (35) über ein Umschaltventil (36) mit der Rücklaufleitung (5) oder über eine Hilfspumpe (37) mit dem Primärkreis (24) des Sekundärwärmetauschers (24) verbindbar ist.

4. Wasserheizer nach einem der Ansprüche 1 bis 3, **dadurch gekennzeichnet**, daß der Wärmespeicher (35) als Latentwärmespeicher ausgebildet ist.

5. Wasserheizer nach Anspruch 1, **dadurch gekennzeichnet**, daß der Primärwärmetauscher (20), die Vorlaufleitung (2) der Heizungsanlage (29) und der Primärkreis des als Wärmetauscher ausgebildeten Wärmespeichers (35) über das als Drei-Wege-Ventil (46) ausgebildete Mehr-Wege-Ventil wahlweise verbindbar ist und der an das Trinkwassernetz angeschlossene Sekundärkreis (48) des Wärmespeichers (35) mit dem Sekundärkreis (40) des Sekundärwärmetauschers (24) verbunden ist.

6. Wasserheizer nach Anspruch 5, **dadurch gekennzeichnet**, daß der Sekundärkreis (48) des Wärmespeichers (35) über ein Mischventil (50), dessen einer Anschluß mit dem Kaltwasseranschluß verbunden ist, mit dem Sekundärkreis (40) des Sekundärwärmetauschers (24) verbindbar ist.

7. Wasserheizer, bei dem ein Heizwasserspeicher (106) zur Versorgung einer Heizungsanlage (111) und zur Versorgung des Sekundärwärmetauschers (107) zur Brauchwasserbereitung vorgesehen ist und in einer zum Primärwärmetauscher (20) führenden Vor- oder Rücklaufleitung eine Umwälzpumpe (129) angeordnet ist, **dadurch gekennzeichnet**, daß der Primärwärmetauscher (20) über ein Mehrstellungsventil (104) wahlweise, zumindest indirekt, mit der Heizanlage (111) oder dem Sekundärwärmetauscher (107) zur Bereitung von Brauchwasser oder dem Heizwasserspeicher (106) verbindbar ist und daß über dieses Ventil (104) der Heizwasserspeicher (106) auch sowohl mit dem Primärwärmetauscher (20), dem Sekundärwärmetauscher (107) oder/und der Heizanlage (111) verbindbar ist, so daß sowohl der Heizwasserspeicher (106) allein als auch die Serienschaltung beider mit der Heizanlage (111) oder dem Sekundärwärmetauscher (107) verbindbar sind beziehungsweise der Inhalt des Heizwasserspeichers (106) vom Primärwärmetauscher (20) aufgeheizt werden können.

8. Wasserheizer nach Anspruch 7, **dadurch gekennzeichnet**, daß in der vom Speicher (106) zum Primärwärmetauscher (20) führenden Rücklaufleitung ein weiteres Mehrstellungsventil (126) angeordnet ist, an dessen einem Anschluß eine im oberen Bereich (136) des Speichers (106) von diesem ausgehende Leitung (127) angeschlossen ist.

9. Wasserheizer nach Anspruch 7 oder 8, **dadurch gekennzeichnet**, daß eine Rücklaufleitung (117, 118) der Heizungsanlage (111) und des Primärzweiges (108) des Sekundärwärmetauschers (107) miteinander verbunden sind und in den unteren Bereich (137) des Speichers (106) münden.

10. Wasserheizer nach einem der Ansprüche 1 bis 9, **dadurch gekennzeichnet**, daß an den Heizwasserspeicher (106) ein Sonnenkollektor (133) mit seiner Vor- und Rücklaufleitung (131, 132) angeschlossen ist.

11. Wasserheizer nach Anspruch 1, **dadurch gekennzeichnet**, daß der Sekundärwärmetauscher (205) in einem Brauchwasserspeicher (206) angeordnet ist und der Sekundärwärmetauscher (205) über ein Drei-Wege-Ventil (212) wahlweise mit der Saugseite der Umwälzpumpe (210) und dem Rücklaufanschluß des Primärwärmetauschers (20) verbindbar ist.
